# EUROPEAN PATENT SPECIFICATION

(11) **EP 1 369 861 B1**
(45) Date of publication and mention of the grant of the patent: **07.11.2012**
(21) Application number: 03077506.8
(22) Date of filing: 22.08.2001
(51) Int. Cl.: G11B 7/0045, G11B 7/246, G11B 7/247, C09B 23/14

(54) **Optical recording media**
Optische Aufzeichungsmedien
Supports d'enregistrement optique

(30) Priority: 25.08.2000 JP 2000254767
(43) Date of publication of application: 10.12.2003
(62) Divisional of application: 01307143.6
(73) Proprietor: KABUSHIKI KAISHA HAYASHIBARA SEIBUTSU KAGAKU KENKYUJO, Okayama-shi, Okayama (JP)
(72) Inventor: Matsui, Fumio, Kabushiki Kaisha Hayashibara, Okayama-shi, Okayama 700-0907 (JP); Aizawa, Yasushi, Kabushiki Kaisha Hayashibara, Okayama-shi, Okayama 700-0907 (JP); Matsuura, Dai, Kabushiki Kaisha Hayashibara, Okayama-shi, Okayama 700-0907 (JP)
(74) Representative: Hill, Christopher Michael

(56) References cited:
- EP-A- 1 130 063
- EP-A- 1 156 084
- DE-A1- 19 927 714
- GB-A- 2 329 751
- JP-A- 10 044 606
- JP-A- 2000 030 287
- US-A- 5 821 029
- PATENT ABSTRACTS OF JAPAN vol. 017, no. 324 (M-1433), 21 June 1993 (1993-06-21) & JP 05 038878 A (NIPPON COLUMBIA CO LTD), 19 February 1993 (1993-02-19)
- PATENT ABSTRACTS OF JAPAN vol. 1998, no. 11, 30 September 1998 (1998-09-30) & JP 10 151854 A (MITSUI CHEM INC), 9 June 1998 (1998-06-09)
- PATENT ABSTRACTS OF JAPAN vol. 1999, no. 05, 31 May 1999 (1999-05-31) & JP 11 034497 A (MATSUSHITA ELECTRIC IND CO LTD;NIPPON KANKO SHIKISO KENKYUSHO:KK), 9 February 1999 (1999-02-09)

## Description

### Field of the Invention

The present invention relates to optical recording media.

### Description of the Prior Art

In a multimedia age, there have been highlighted optical recording media such as compact disc recordable (CD-R, a write-once memory using compact disc); and digital versatile disc (DVD-R, a write-once memory using digital video disc). Optical recording media can be classified roughly into inorganic optical recording media which have recording layers composed of inorganic substances such as tellurium, selenium, rhodium, carbon, or carbon sulfide; and organic optical recording media which have recording layers composed of light absorbents containing organic dye compounds mainly.

Among these optical recording media, organic optical recording media are usually prepared by dissolving an organic dye compound including a polymethine dye in an organic solvent such as 2,2,3,3-tetrafluoro-1-propanol (abbreviated as "TFP" hereinafter), coating the solution on the surface of a polycarbonate substrate, drying the solution to form a recording layer, and sequentially attaching closely a reflection layer made of a metal such as gold, silver or copper and a protective layer made of an ultraviolet ray hardening resin, etc., onto the recording layer. When compared with inorganic optical recording media, organic optical recording media have the drawback that their recording layers may be easily changed by exposure to light such as reading- and natural-light, but have the merit that they can be manufactured at a lesser cost because their recording layers can be formed by preparing solutions of light absorbents and directly coating the solutions on the surface of substrates. Also, organic optical recording media are now becoming predominant low-cost optical recording media because of the merits that they are mainly composed of organic substances so that they are substantially free of corrosion even when contacted with moisture or sea water; and because information, which is stored in optical recording media in a prescribed format, can be read out using commercialized read-only players by the establishment of thermal-deformation-type optical recording media.

PATENT ABSTRACTS OF JAPAN vol. 1998, no.11, 30 September 1998 & JP 10151854 A (MITSUI CHEM INC), 9 June 1998, discloses an optical recording medium consisting of a recording layer containing a laser beam absorbing colouring matter formed, directly or though another layer, on the recording layer. The colouring matter is a styryl colouring matter.

EP-A-1 156084 (SAMSUNG ELECTRONICS CO LTD) 21 November 2001, discloses a hemicyanine dye and an optical recording medium using the hemicyanine dye.

EP-A-1 130063 (HAYASHIBARA BIOCHEM LAB) 5 September 2001, provides dimethine styryl dyes which exert satisfactory recording properties in high-density optical recording media, and uses thereof.

JP10044606 (MITSUBISHI CHEM CORP) 17 February 1998, discloses a metal chelate compound composed of an azo compound and a metal contained in a recording layer.

US5821029 (EASTMAN KODAK CO) 13 October 1998, discloses a recording layer comprising a metallized carbomoylazo dye and a cyanine dye.

What is urgently required of organic optical recording media is to increase their recording capacity which corresponds to this multimedia age. The research for such an increment now eagerly continued mainly in this field is to shorten the wavelength of 775-795 nm irradiated by GaAlAs semiconductor lasers now used as a writing light to a wavelength of 660 nm or less to increase the recording capacity per one side to a level of 4.7 giga bytes (GB) or higher.

In DVD-Rs which have been expected as high-density optical recording media to be substituted for CD-Rs, it is proposed that laser beams with wavelengths of 660 nm or less as a writing light should be used, however, since most of the organic dye compounds explored for CD-Rs do not substantially absorb such a writing light in a region with wavelengths longer than those of their absorption maxima, it has been recognized that such organic dye compounds could not accurately write and read information when used in DVD-Rs. Accordingly, different types of organic dye compounds, which substantially absorb a visible light with a wavelength of 660 nm or less in a region with wavelengths longer than those of their absorption maxima, have now been eagerly and experimentally prepared and tested for optical properties when used in DVD-Rs. However, the molecular designing of a new organic dye compound requires tests on optical property and stability, and the establishment of the method for producing such an organic dye compound may consume a relatively-large amount of costs and labors.

### Summary of the Invention

In view of the foregoing, the object of the present invention is to explore the potential uses of organic dye compounds, which have been conventionally deemed to be inapplicable to optical recording media, and to widen the choices of the organic dye compounds used to produce optical recording media.

The present inventors' energetic study revealed that even an organic dye compound, which has been deemed to be inapplicable to optical recording media and which substantially absorbs a writing light in a region with wavelengths shorter than that of the absorption maximum of the organic dye compound, can be advantageously useful as a light absorbent for mainly forming pits on substrates of optical recording media.

The present invention solves the above object by providing an optical recording medium which comprises a substrate and a recording layer provided on the substrate using an organic dye compound and which records information by irradiating the recording layer with a writing light consisting of a laser beam at a wavelength of around 405nm to act on the organic dye compound to form a pit on the substrate, wherein the organic dye compound has an absorption maximum at a wavelength longer than that of the writing light, substantially absorbs said writing light, and is a compound represented by any one of Chemical Formulae 20, 23 and 35.

Also described is an optical recording method to record information by using an optical recording medium comprising a substrate and a recording layer provided on the substrate by using an organic dye compound and irradiating the recording layer with a writing light to act on the organic dye compound to form a pit on the substrate, the improvement comprising using, as a main organic dye compound for forming pits, an organic dye compound which substantially absorbs a writing light with a wavelength longer than the absorption maximum of the organic dye compound, and irradiating a recording layer on a substrate with the writing light to form a pit on the substrate.

The present invention solves the above object by providing an organic dye compound which can be used in the above optical recording media and the optical recording method.

The invention is defined by the claims. Subject matter outside the scope of the claims is provided for comparison only.

### Brief Description of the Accompanying Drawing

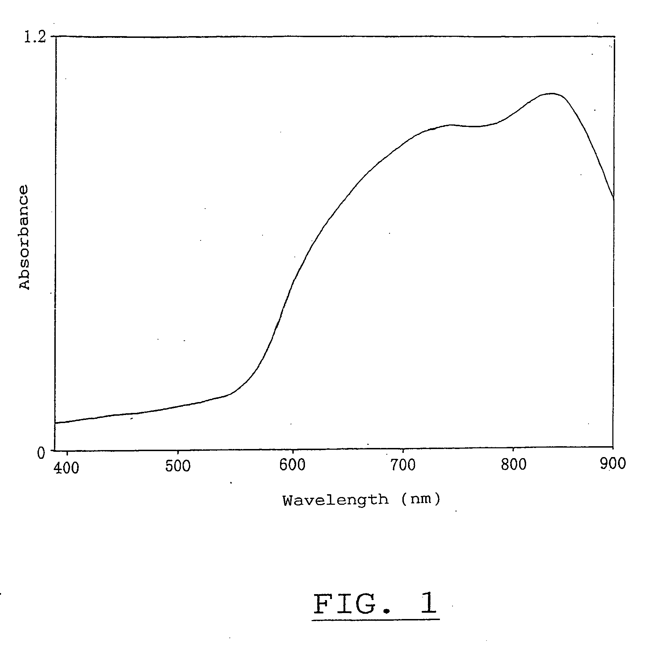

FIG. 1 is a visible absorption spectrum of one of the organic dye compounds according to the present invention when in a thin-layer form.

### Detailed Description of the Invention

Explaining the preferred embodiments of the present invention, the term "organic dye compound(s)" as referred to in the present invention means organic dye compounds in general having atomic groups capable of absorbing visible light within their molecules. These organic dye compounds can be those which comprise atoms linked together via the covalent bond alone or along with non-covalent bonds such as ion bond and coordination bond. Any organic dye compound selected from Chemical Formulae 20, 23 and 35 can be used in the present invention as they fulfill the above requirements and substantially absorb writing lights in a region with wavelengths shorter than those of the absorption maxima of the organic dye compounds used.

The term "absorption maximum or maxima" of organic dye compounds as referred to in the present invention means those which are measured in a thin-layer form, unless specified otherwise.

Examples of the organic dye compounds are polymethine dyes such as a cyanine, merocyanine, oxonol, azulenium, squallilium, pyrylium, thiopyrylium, and phenanthrene dyes, which have a monomethine chain or polymethine chain such as a dimethine, trimethine, tetramethine, pentamethine, hexamethine, or heptamethine chain that may contain one or more substituents, and which may bind one or more of the following the same or different cyclic cores at their both ends: Rings of imidazoline, imidazole, benzimidazole, α-naphthoimidazole, β-naphthoimidazole, indole, isoindole, indolenine, isoindolenine, benzoindolenine, pyridinoindolenine, oxazoline, oxazole, isoxazole, benzoxazole, pyridineoxazole, α-naphthoxazole, β-naphthoxazole, selenazoline, selenazole, benzoselenazole, α -naphthoselenazole, β - naphthoselenazole, thiazoline, thiazole, isothiazole, benzothiazole, α-naphthothiazole, β-naphthothiazole, tellulazoline, tellulazole, benzotellulazole, α -naphthotellulazole, β-naphthotellulazole, aquaridine, anthracene, isoquinoline, isopyrrole, imidazoquinoxaline, indandione, indazole, indoline, oxadiazole, carbazole, xanthene, quinazoline, quinoxaline, quinoline, chroman, cyclohexanedione, cyclopentanedione, cinnoline, thiodiazole, thiooxazolidone, thiophene, thionaphthene, thiobarbituric acid, thiohydantoin, tetrazole, triazine, naphthalene, naphthyridine, piperazine, pyrazine, pyrazole, pyrazoline, pyrazolidine, pyrozolone, pyran, pyridine, pyridazine, pyrimidine, pyrylium, pyrrolidine, pyrroline, pyrrole, phenazine, phenanthridine, phenanthrene, phenanthroline, phthalazine, pteridine, furazan, furan, purine, benzene, benzoxazine, benzopyran, morpholine, and rhodanine. In addition, the following organic dye compounds can be mentioned; acridine, azaannulene, azo metal complex, anthraquinone, indigo, indanthrene, oxazine, xanthene, dioxazine, thiazine, thioindigo, tetrapyraporphyradine, triphenylmethane, triphenothiadine, napthoquinone, phthalocyanine, benzoquinone, benzopyran, benzofuranone, porphyrin, and rhodamine dyes. Cyanine dyes, styryl dyes or metal complexes of azo compounds, which have any one of Formulae 1 to 3, have absorption maxima at wavelengths shorter than 850 nm, and substantially absorb writing lights with wavelengths of 700 nm or less in a region with wavelengths shorter than those of the absorption maxima of the organic dye compounds, particularly, those with wavelengths of 390-450 nm or 630-680 nm.

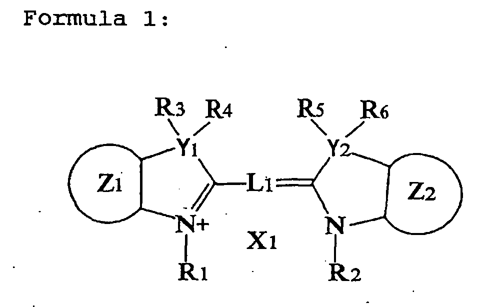

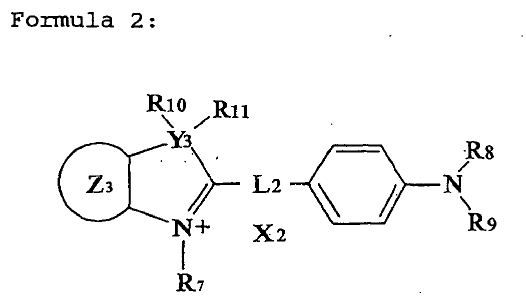

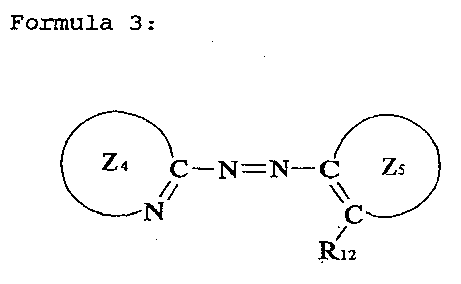

Throughout Formulae 1 and 2, Z₁ to Z₃ represent aromatic rings such as benzene, naphthalene, pyridine, quinoline, and quinoxaline rings, which all may have one or more substituents. Examples of the substituents are aliphatic hydrocarbon groups such as methyl, trifluoromethyl, ethyl, propyl, isopropyl, butyl, isobutyl, sec-butyl, tert-butyl, pentyl, isopentyl, neopentyl, tert-pentyl, 1-methylpentyl, 2-methylpentyl, hexyl, isohexyl, 5-methylhexyl, heptyl, and octyl groups; alicyclic hydrocarbon groups such as cyclopropyl, cyclobutyl, cyclopentyl, and cyclohexyl groups; aromatic hydrocarbon groups such as phenyl, biphenyl, o-tolyl, m-tolyl, p-tolyl, xylyl, mesityl, o-cumenyl, m-cumenyl, and p-cumenyl groups; ether groups such as methoxy, trifluoromethoxy, ethoxy, propoxy, isopropoxy, butoxy, sec-butoxy, tert-butoxy, pentyloxy, phenoxy, and benzoyloxy groups; ester groups such as methoxycarbonyl, trifluoromethoxycarbonyl, ethoxycarbonyl, propoxycarbonyl, acetoxy, and benzoyloxy groups; halogens such as fluoro, chloro, bromo, and iodo; thio groups such as methylthio, ethylthio, propylthio, butylthio, and phenylthio groups; sulphamoyl groups such as methylsulphamoyl, dimethylsulphamoyl, ethylsuphamoyl, diethylsulphamoyl, propylsulphamoyl, dipropylsulphamoyl, butylsulphamoyl, and dibutylsulphamoyl groups; amino groups such as primary amino, methylamino, dimethylamino, ethylamino, diethylamino, propylamino, dipropylamino, isopropylamino, disopropylamino, butylamino, dibutylamino, and piperidino groups; carbamoyl groups such as methylcarbamoyl, dimethylcarbamoyl, ethylcarbamoyl, diethylcarbamoyl, propylcarbamoyl, and dipropylcarbamoyl groups; and other groups such as hydroxy, carboxy, cyano, nitro, sulfino, sulfo, and mesyl groups. In formula 1, Z₁ and Z₂ may be independently the same of different.

Y₁ to Y₃ in Formulae 1 and 2 represent carbon atoms or hetero atoms. Examples of such hetero atoms are those which belong to the 15 and 16 groups in the periodic table such as nitrogen, oxygen, sulfur, selenium, and tellurium atoms. The carbon atoms in Y₁ to Y₃ can be atomic groups which are mainly composed of two carbon atoms such as ethylene or vinylene group. Y₁ to Y₃ in Formula 1 may be independently the same or different.

In Formulae 1 and 2, R₁, R₂, and R₇ to R₉ represent aliphatic hydrocarbon groups. Examples of such aliphatic hydrocarbon groups are methyl, ethyl, ethyl, propyl, isopropyl, isopropenyl, 1-propenyl, 2-propenyl, butyl, isobutyl, sec-butyl, tert-butyl, 2-butenyl, 1,3-butadienyl, pentyl, isopentyl, neopentyl, tert-pentyl, 1-methylpentyl, 2-methylpentyl, 2-pentenyl, hexyl, isohexyl, 5-methylhexyl, heptyl, and octyl groups. These aliphatic hydrocarbon groups may have one or more substituents similarly as in Z₁ to Z₃. R₁ and R₂ in Formula 1 and R₇ to R₉ in Formula 2 may be independently the same or different.

R₃ to R₅, R₁₀ and R₁₁ in Formulae 1 and 2 independently represent hydrogen atoms or compatible substituents in each Formula. Examples of such substituents are aliphatic hydrocarbon groups such as methyl, trifluoromethyl, ethyl, propyl, isopropyl, butyl, isobutyl, sec-butyl, tert-butyl, pentyl, isopentyl, neopentyl, tert-pentyl, 1-methylpentyl, 2-methylpentyl, hexyl, isohexyl, 5-methylhexyl, heptyl, and octyl groups; ether groups such as methoxy, trifluoromethoxy, ethoxy, propoxy, butoxy, tert-butoxy, pentyloxy, phenoxy, and benzoyloxy groups; halogens such as fluoro, chloro , bromo, and iodo; and others such as hydroxy, carboxy, cyano, and nitro groups . In Formulae 1 and 2, when Y₁ and Y₂ are hetero atoms, the whole or a part of R₃ to R₆ in Formulae Z₁ and Z₂, and either or both R₁₀ and R₁₁ in Z₃ do not exist.

L₁ and L₂ in Formulae 1 and 2 represent polymethine chains:
L₁ in Formula 1 can be selected from polymethine chains with odd numbers of methine groups such as trimethine, pentamethine, and heptamethine; and L₂ in Formula 2 can be selected from polymethine chains with even numbers of methine groups such as dimethine, tetramethine, and hexamethine groups. These polymethine chains may have substituents and/or cyclic groups; examples of such substituents include aliphatic hydrocarbon groups such as methyl, trifluoromethyl, ethyl, propyl, isopropyl, butyl, isobutyl, sec-butyl, tert-butyl, pentyl, isopentyl, neopentyl, and tert-pentyl groups; ether groups such as methoxy, trifluoromethoxy, ethoxy, propoxy, butoxy, and tert-butoxy; halogens such as fluoro, chloro, bromo, and iodo; amino groups such as diphenylamino and p-methoxydiphenylamino groups; and others such as nitro and cyano groups; and examples of such cyclic groups are cyclopentene and cyclohexene rings. As for light absorbents used in optical recording media which use writing lights with wavelengths of around 660 nm, the organic dye compounds, represented by Formula 1 with a heptamethine chain as L₁, are preferably used. In the case of using the organic dye compounds represented by Formula 1 or 2 in optical recording media using writing lights with wavelengths of around 405 nm, those which have trimethine and dimethine chains as L₁ and L₂, respectively, are preferably used.

X₁ and X₂ in Formulae 1 and 2 are counter ions which can be appropriately selected from the following ions, while evaluating their solubility in organic solvents and their stability in a glass state; inorganic anions such as fluoric ion, chloric ion, bromic ion, iodic ion, perchloric acid ion, periodic acid ion, phosphoric acid hexafluoride ion, antimony hexafluoride ion, tin acid hexafluoride ion, nitric acid ion, phosphoric acid ion, fluoroboric acid ion, and tetrafluoroborate ion; organic anions such as salicylic acid ion, p-hydroxy salicylic acid ion, thiocyanic acid ion, benzenesulfonic acid ion, naphthalenesulfonic acid ion, naphthalenedisulfonic acid ion, p-toluenesulfonic acid ion, alkylsulfonic acid ion, benzenecarboxylic acid ion, alkylcarboxylic acid ion, trihaloalkylcarboxylic acid ion, alkylsulfonic acid ion, trihaloalkylsulfonic acid ion, and nicotinic acid ion; organic metal complex anions such as azo, bisphenyldithiol, thiocatechol chelate, thiobisphenolate chelate, and bisdiol-α-diketone; and other cations such as trimethylammonium ion and triethylammonium ion.

Now explaining Formula 3, Z₄ and Z₅ independently represent the same or different aromatic hydrocarbon groups or heterocyclic groups. Examples of the aromatic hydrocarbon groups include phenyl, biphenyl, and naphthyl groups; and examples of the heterocyclic groups include pyridyl, quinolyl, isoxazolyl, isothiazolyl, imidazolyl, oxazolyl, thiodiazolyl, and pyrazolyl groups. These aromatic hydrocarbon groups and heterocyclic groups may have one or more substituents such as those similarly as in Z₁ to Z₃ in Formulae 1 and 2. R₁₂ in Formula 3 represents, for example, an acid group such as phenol hydroxy, carboxy, sulfino, or sulfo group, which may be in a salt form with an inorganic or organic base.

The azo compounds represented by Formula 3 can be generally used in the form of a metal complex which one or more of the azo compounds are configured in metals as center atoms. Examples of such metals as center atoms are generally those which belong to the 3 to 12 groups in the periodic table, for example, atoms, oxides, or halides such as fluorides, bromides, or iodides. Examples of such metal elements are scandium, yttrium, titanium, zirconium, hafnium, vanadium, niobium, tantalum, chromium, molybdenum, tungsten, manganese, technetium, rhenium, iron, ruthenium, osmium, cobalt, rhodium, iridium, nickel, palladium, platinum, copper, silver, gold, zinc, cadmium, and mercury.

Preferable azo compounds are metal complexes having bivalent metals (M) as central atoms, particularly, metal complexes represented by Formula 4. In Formula 4, Az is the azo compound represented by Formula 3 where m is the number of azo compounds as a ligand (Az) configured in M, and is usually 1 or 2. D represents a compatible counter-ion where n denotes the number of D for keeping the electric charge balance in the metal complexes. The metal complexes used usually have an electric balance of -2, 0, or 1. When the electric balance 0, the number of n in the metal complexes is zero, meaning that D does not exist.

Examples of D as a counter ion include phosphoric acid hexafluoride ion, fluoric acid ion, bromic acid ion, iodic acid ion, nitric acid ion, phosphoric acid ion, perchloric acid ion, periodic acid ion, antimony hexafluoride ion, tin acid hexafluoride ion, fluoroboric acid ion, tetrafluoroborate ion, thiocyanic acid ion, benzenesulfonic acid ion, naphthalenesulfonic acid ion, benzenecarboxylic acid ion, alkylcarboxylic acid ion, trihaloalkylcarboxylic acid ion, alkylsulfonic acid ion, trihaloalkylsulfonic acid ion, and nicotinic acid ion; and other cations such as ammonium ion and tetraalkylammonium ion.

Formula 4: AZₘ • M • Dₙ

When the organic dye compounds represented by Formulae 1 to 3 have isomers such cis/trans isomers with respect to their chemical structures, they all can be included in the present invention.

The organic dye compounds used in the present invention consist of those represented by Chemical Formulae 20,23 and 35. The organic dye compounds represented by Chemical Formulae 1 to 19 can be advantageously useful in optical recording media using writing lights with wavelengths of around 630-680 nm, and those represented by Chemical Formulae 21, 22, 24-34 and 36-38 can be advantageously useful in optical recording media using writing lights with wavelengths of around 390-450 nm. The organic dye compounds represented by Chemical Formulae 20, 23 and 35 used in the present invention can be advantageously used in optical recording media using writing lights with wavelengths of around 405 nm. All the organic dye compounds represented by Chemical

Formulae 1 to 38 substantially absorb the aforesaid writing lights in a region with wavelengths shorter than those of their absorption maxima: The organic dye compounds represented by Chemical Formulae 1 to 19 have absorption maxima in regions with wavelengths longer than 680 nm and substantially absorb writing lights with wavelengths of around 630-680 nm in regions with wavelengths shorter than those of their absorption maxima, and the organic dye compounds represented by Chemical Formulae 20 to 38 have absorption maxima in regions with wavelengths longer than 450 nm and substantially absorb writing lights with wavelengths of around 390-450 nm in regions with wavelengths shorter than those of their absorption maxima. The organic dye compound represented by Chemical Formula 2 shows a visible absorption spectrum in FIG. 1. As evident from the visible spectrum as in FIG. 1, the organic dye compound represented by Chemical Formula 2 has absorption maxima at both wavelengths of around 730 nm and around 820 nm and substantially absorbs writing lights with wavelengths of around 660 nm in regions with wavelengths shorter than those of the absorption maxima. The organic dye compounds, represented by Chemical Formulae 1 to 38, can be yielded in a desired amount by conventional methods or in accordance with conventional methods for producing related compounds.

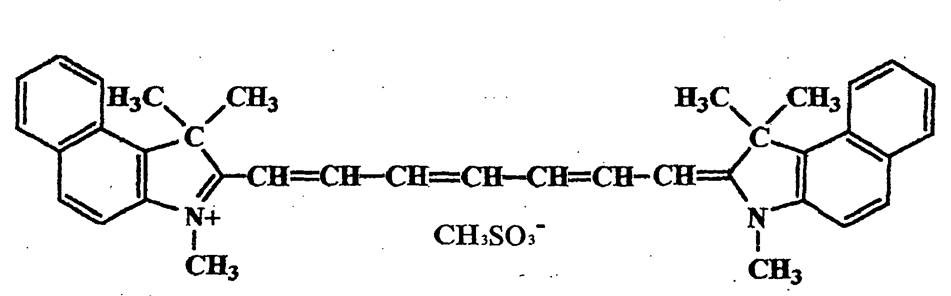

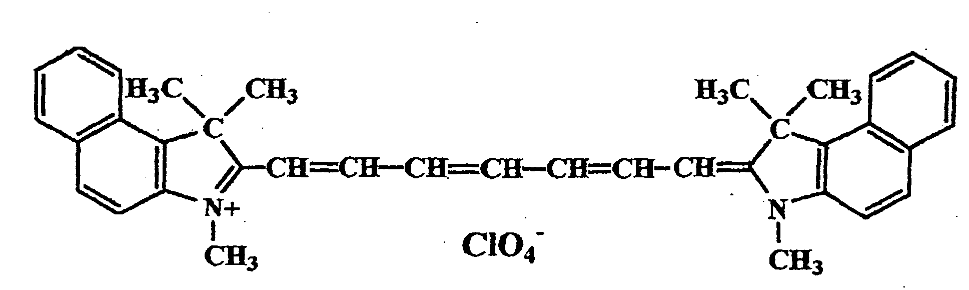

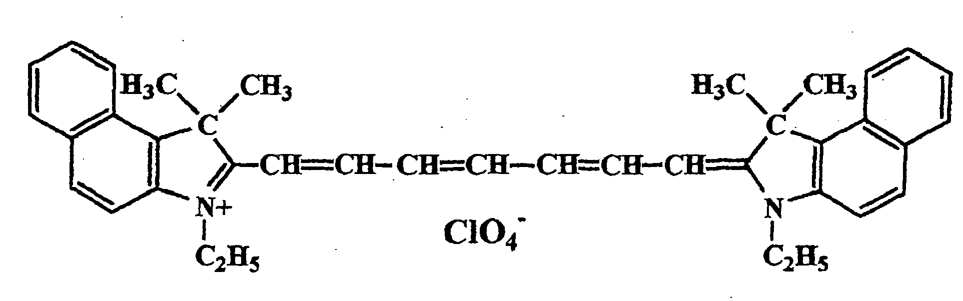

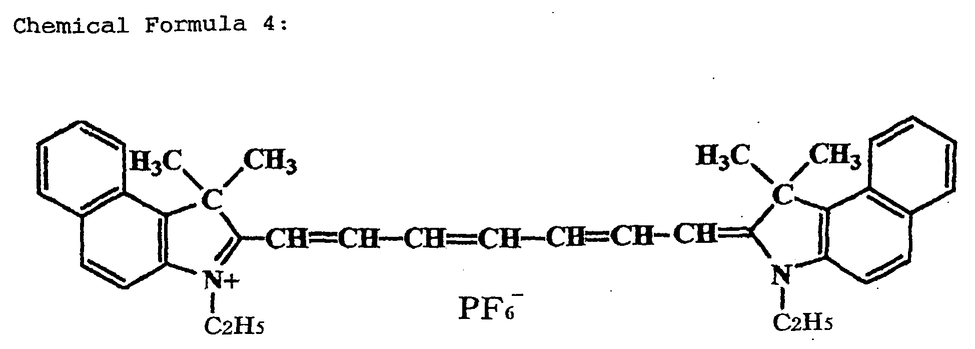

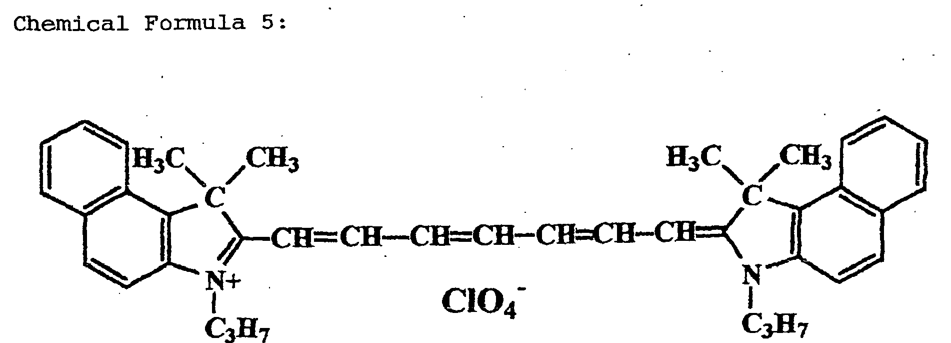

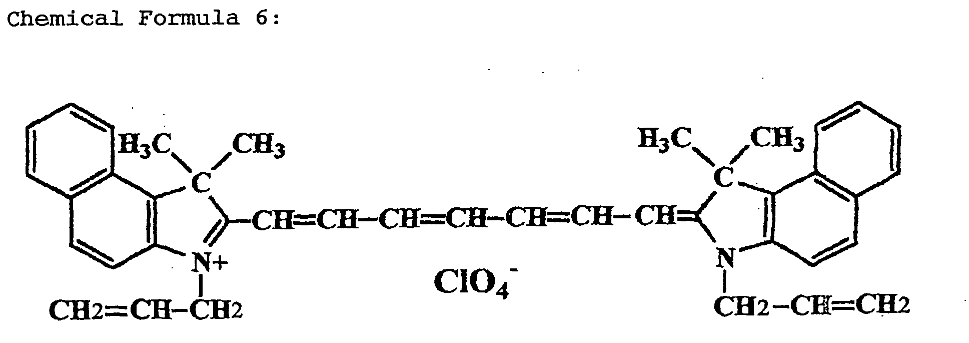

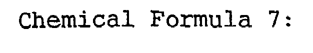

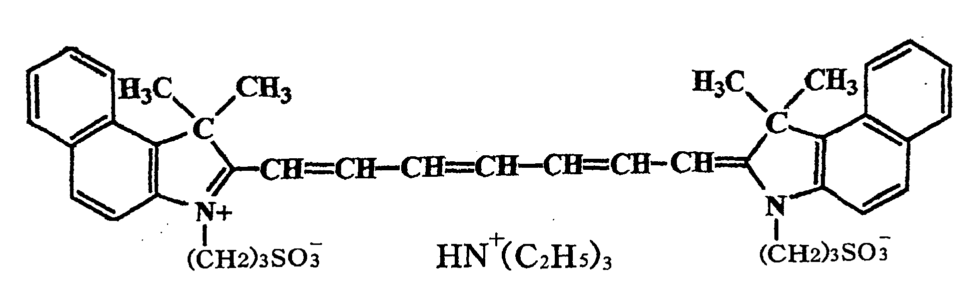

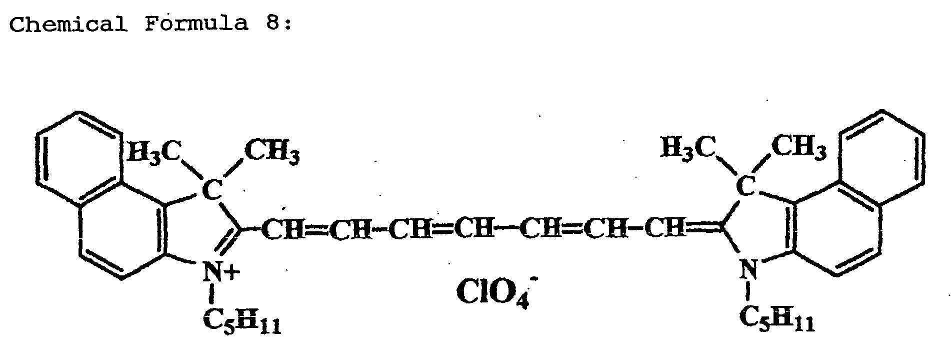

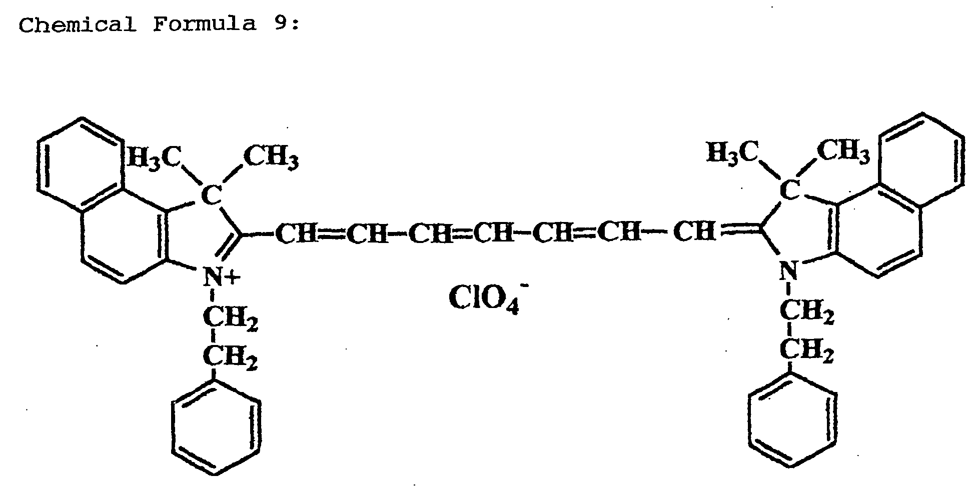

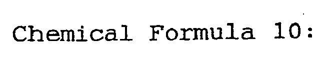

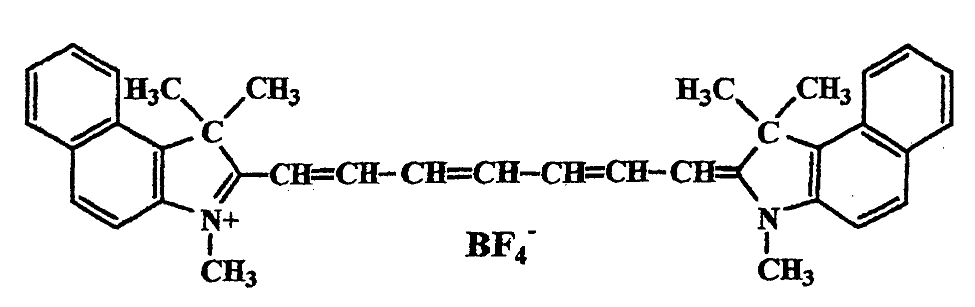

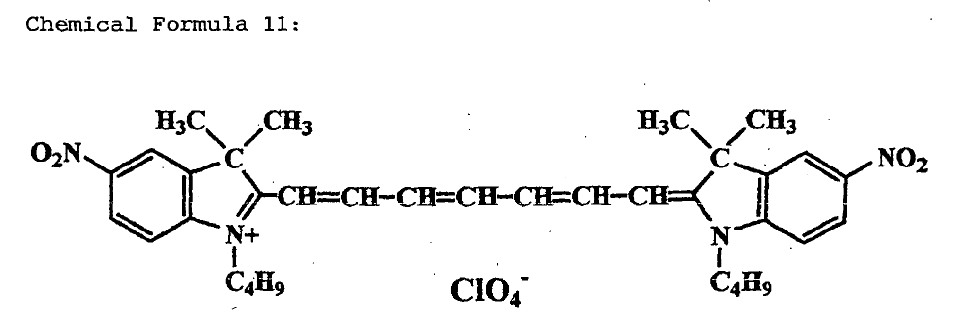

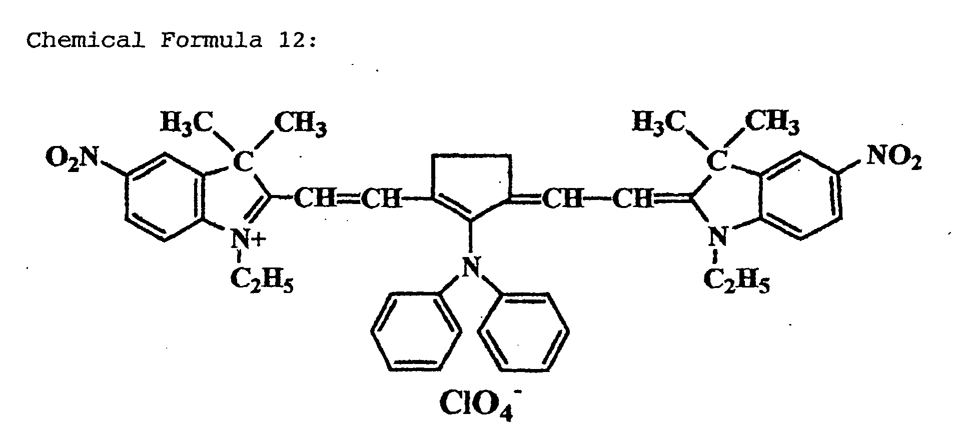

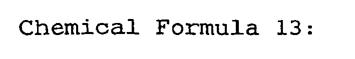

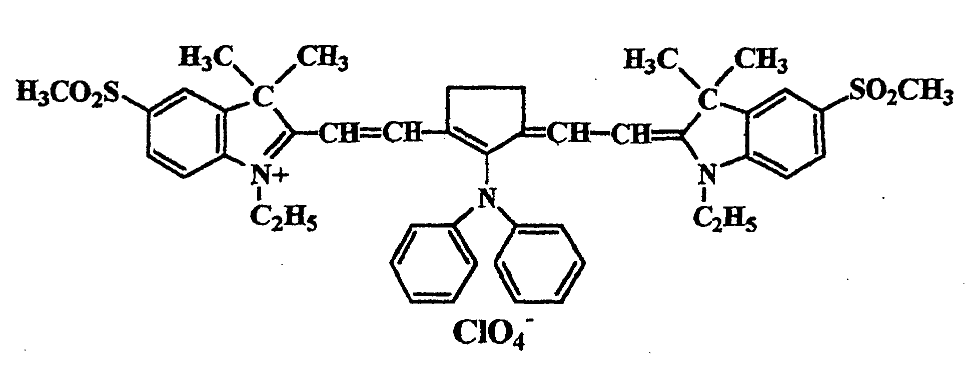

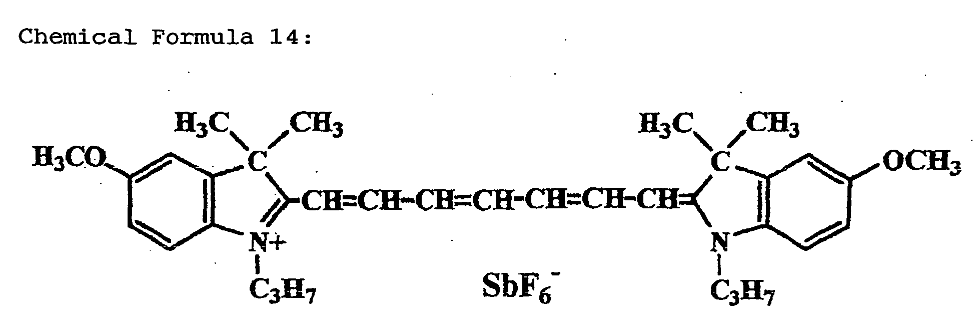

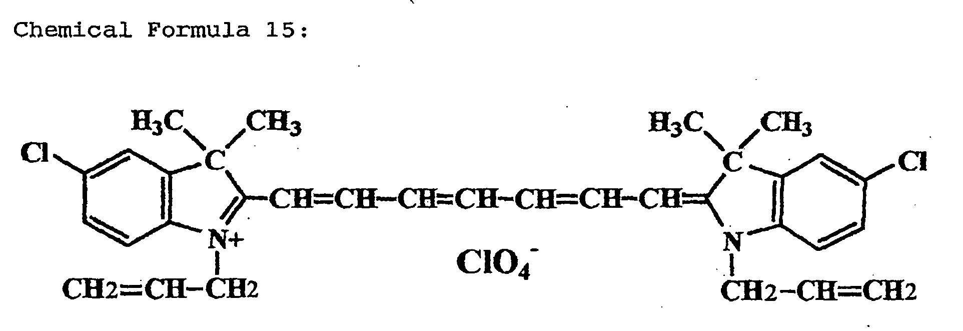

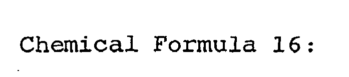

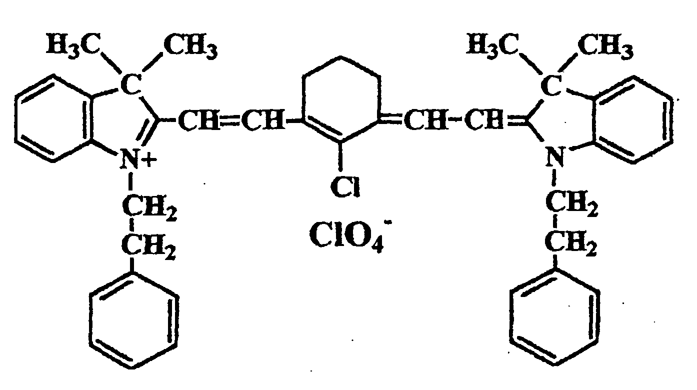

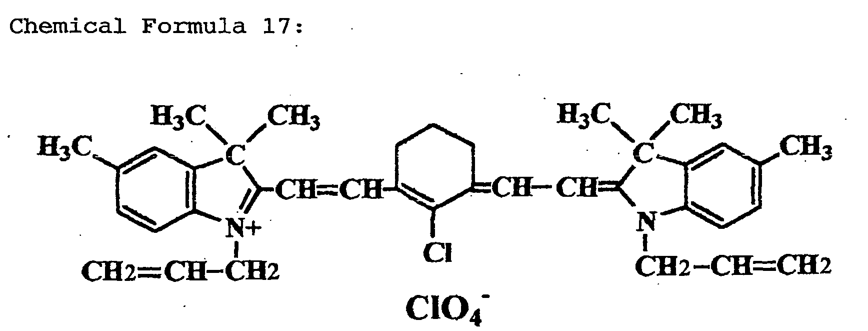

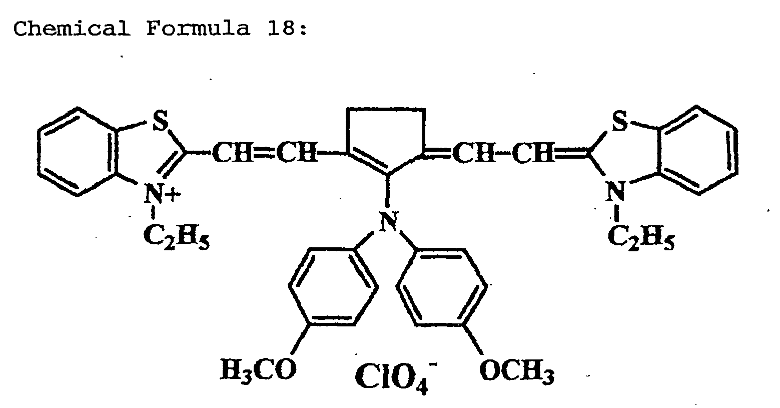

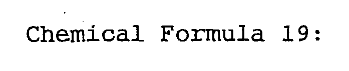

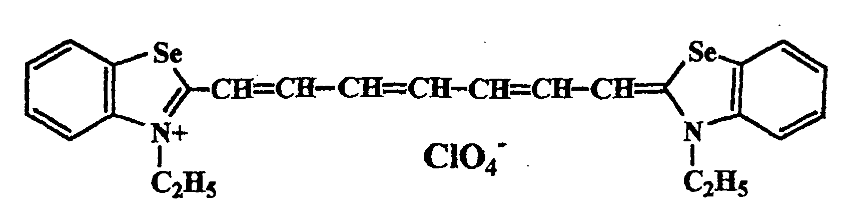

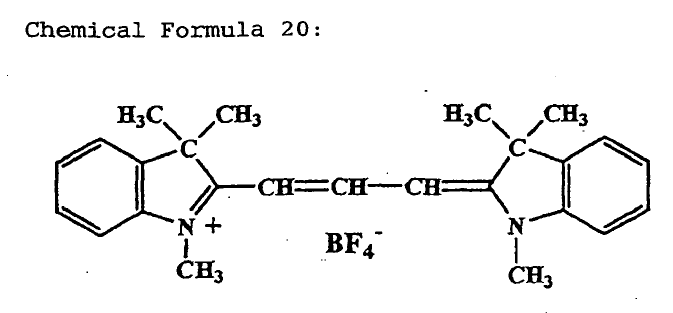

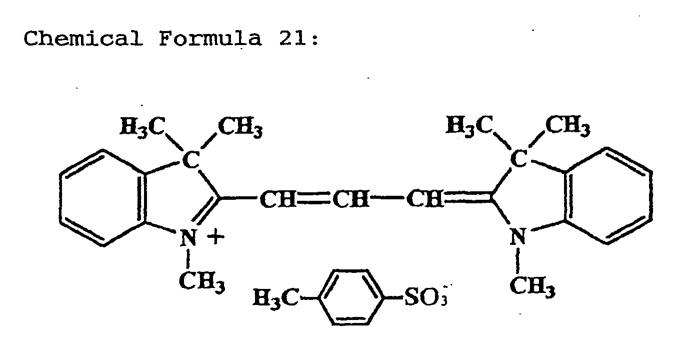

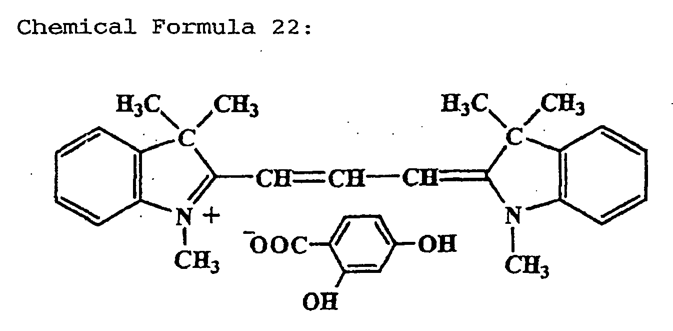

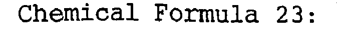

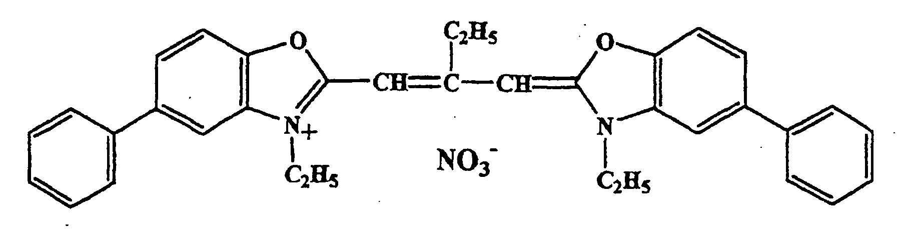

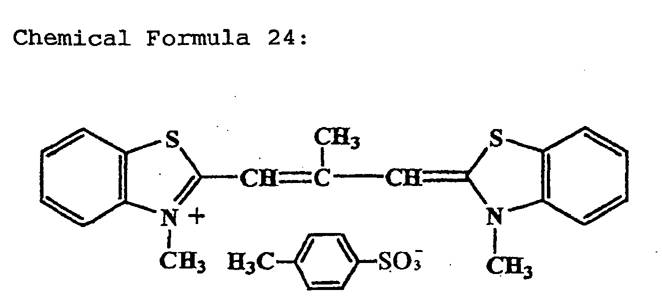

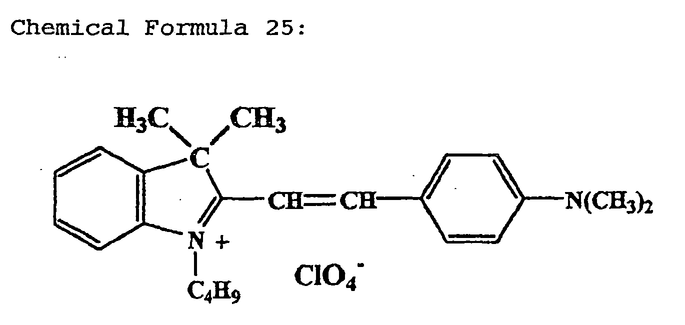

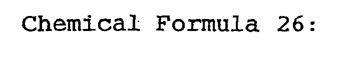

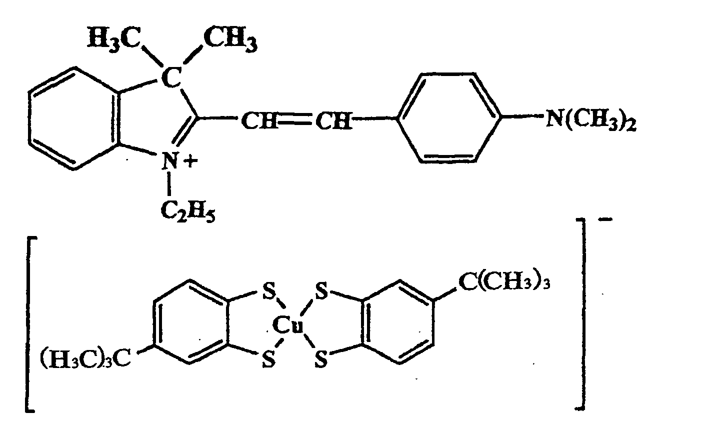

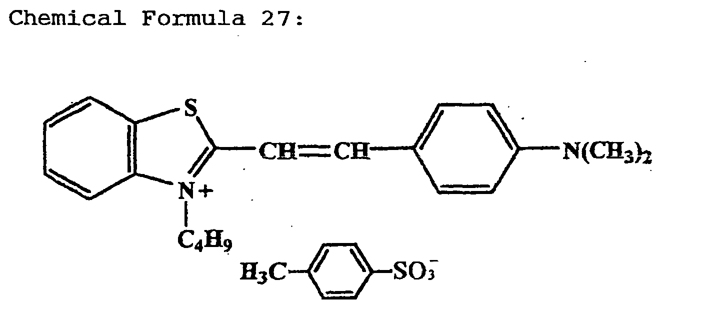

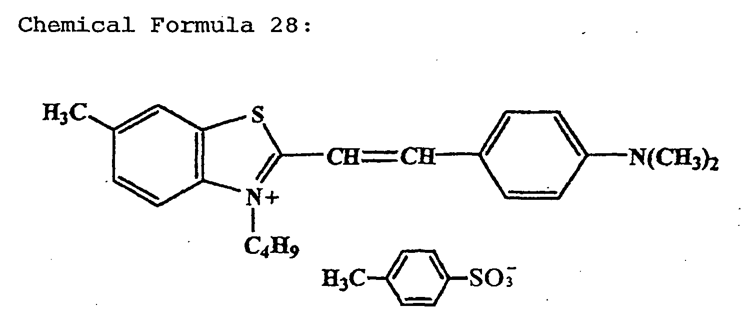

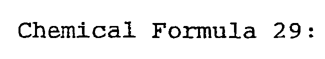

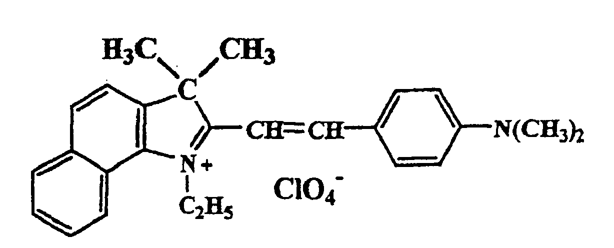

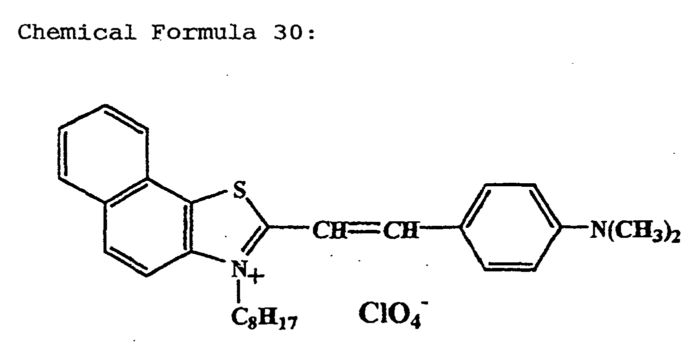

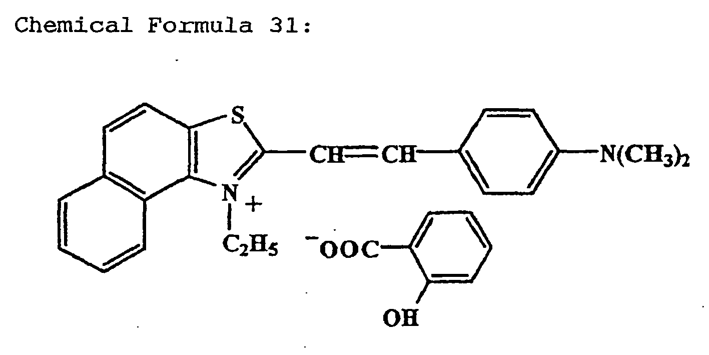

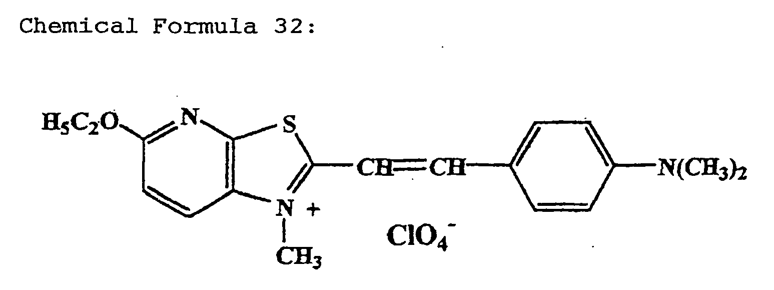

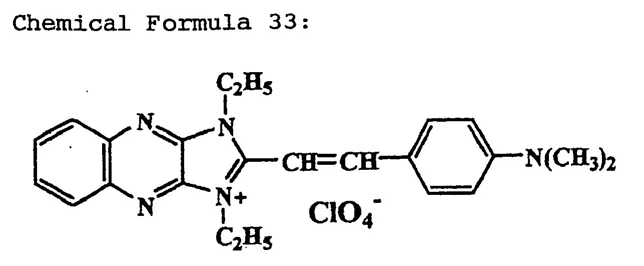

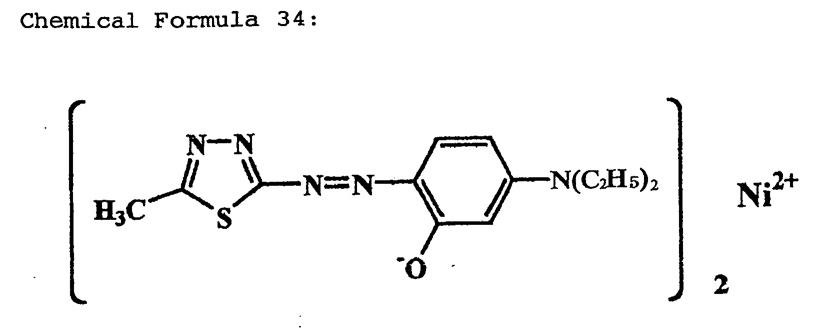

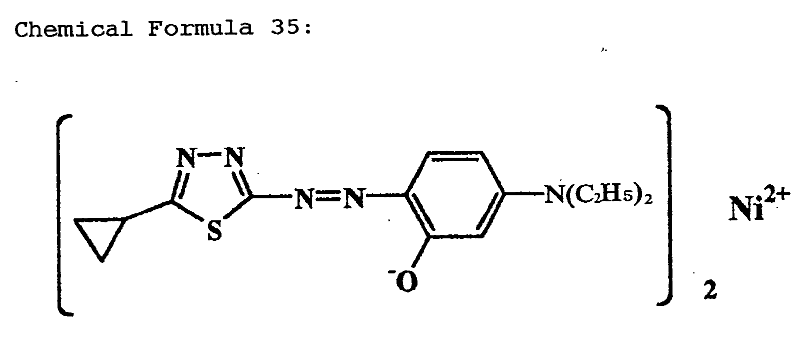

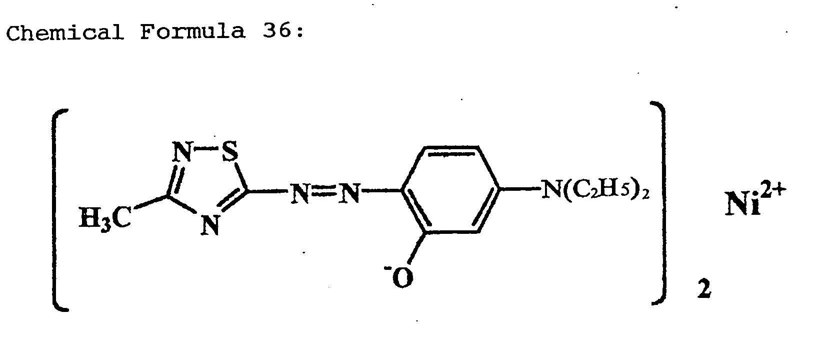

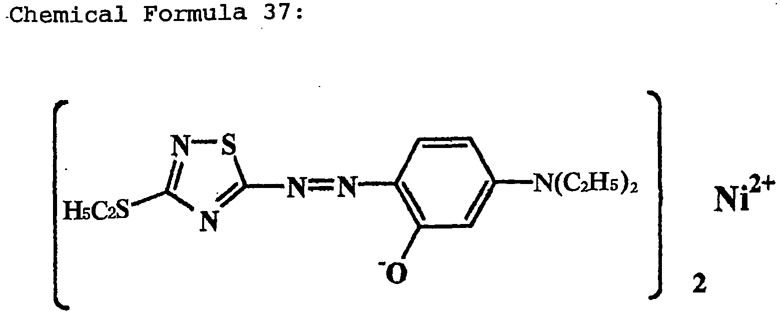

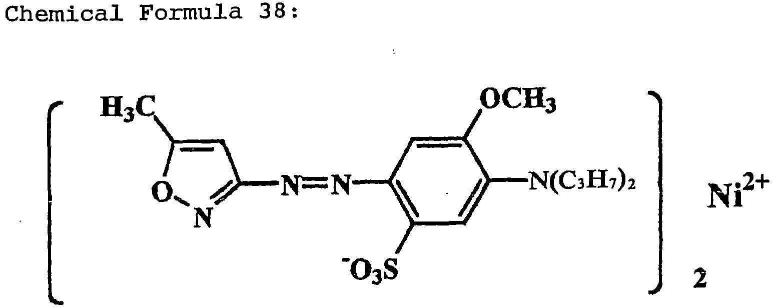

As described above, the present invention is an optical recording medium which comprises a recording layer provided on a substrate using an organic dye compound represented by any one of Chemical Formulae 20, 23 and 35 and which record information by irradiating writing lights at a wavelength of around 405 nm on the recording layers to act on the organic dye compounds to form pits on the substrates.

These optical recording media can be prepared by using the organic dye compounds of the present invention in accordance with conventional methods for preparing optical recording media. Examples of such conventional methods are, for example, to control the reflectance and the absorptance in recording layers of such conventional methods, the above organic dye compounds can be, if necessary, incorporated with one or more other dye compounds sensitive to visible light and further one or more other light resistant improvers, binders, dispersing agents, flame retardants, lubricants, antistatic agents, surfactants, and plasticizers. The resulting mixtures are dissolved in organic solvents into solutions which are then homogeneously coated over either surface of a substrate by a spraying, soaking, roller coating, or rotatory coating method, followed by drying the coated solutions to form thin layers as recording layers, and, if necessary, followed by forming reflection layers to be closely attached on the recording layers by means of vacuum deposition, chemical vapor deposition, sputtering, or ion-planting method using metals such as gold, silver, copper, platinum, aluminum, cobalt, tin, nickel, iron, chromium, and alloys thereof, or using commonly used materials for organic reflection layers to attain a reflection efficiency of 45% or higher, preferably, 55% or higher. Alternatively, to protect recording layers from scratches, dusts, stains, etc., the recording layers can be coated with ultraviolet ray hardening resins or thermosetting resins which contain flame retardants, stabilizers, or antistatic agents, and then the coatings are hardened by irradiating light or heating to form protective layers attached closely over the reflection layers. Thereafter, a pair of substrates with only the above recording layers or with both the above reflection layers and the recording layers are, for example, attached together in such a manner of facing the protective layers on each substrate and attaching the layers together using adhesives or adhesive sheets, etc., or of attaching to the protective layers a protective plates comprising substantially the same materials and shapes as the substrates. The method for forming recording layers should not be restricted to the one for coating using the organic dye compounds in a solution form. The organic dye compounds with sublimation ability can be directly coated on substrates in a thin-layer form of the organic dye compounds by the methods, for example, vacuum deposition, chemical vapor deposition, and atomic layer epitaxy (ALE).

Light-resistant improvers include, for example, nitroso compounds such as nitrosodiphenylamihe, nitrosoaniline, nitrosophenol, and nitrosonaphthol; and metal complexes such as tetracyanoquinodimethane compounds, diimmonium salts, "NKX-1199" (bis[2'-chloro-3-methoxy-4-(2-methoxyethoxy)dithiobenzyl]nickel) produced by Hayashibara Biochemical Laboratories, Inc., Okayama, Japan, azo metal complexes, and formazan metal complexes, which all can be used in an appropriate combination, if necessary. Preferable light-resistant improvers are those which contain nitroso compounds and/or formazan metal complexes, most preferably, those which contain nitroso compounds having a phenylpyridylamine skeleton as disclosed in Japanese Patent Application No. 88,983/99, titled "Phenylpyridylamine derivatives", applied for by the same applicant as the present invention; and metal complexes containing, for example, metals such as nickel, zinc, cobalt, iron, copper, palladium, etc., which have as ligands one or more formazan compounds having a pyridine ring at C-5 of the formazan skeleton and a pyridine- or furan-ring at C-3 of the formazan skeleton, and their tautomers, as disclosed in Japanese Patent Application No. 163,036/99, titled "Formazan metal complexes" applied for by the same applicant as the present invention. The use of the above light-resistant improvers in the organic dye compounds does not lower the solubility in organic solvents of the organic dye compounds of the present invention, does not substantially deteriorate the desired optical properties of the organic dye compounds, and effectively inhibits the undesirable changing in deterioration, fading, color change, and quality change of the organic dye compounds which are inducible by the exposure of reading- and environmental-light. As for the composition ratio, 0.01-5 moles, preferably, 0.1-2 moles of a light-resistant improver(s) can be incorporated into one mole of the organic dye compound(s) of the present invention while increasing or decreasing the ratio.

The organic solvents used for coating the organic dye compounds of the present invention can be selected from among TFP used frequently to prepare optical recording media, and the following organic solvents other than TFP; hydrocarbons such as hexan, cyclohexane, methylcyclohexane, dimethylcyclohexane, ethylcyclohexane, isopropylcyclohexane, tert-butylcyclohexane, octane, cyclooctane, benzene, toluene, and xylene; halogenides such as carbon tetrachloride, chloroform, 1,2-dichloroethane, 1,2-dibromoethane, trichloroethylene, tetrachloroethylene, chlorobenzene, bromobenzene, and α-dichlorobenzene; alcohols and phenols such as methanol, ethanol, 2,2,2-trifluoroethanol, 2-methoxyethanol (methyl cellosolve), 2-ethoxyethanol (ethyl cellosolve), 2-isopropoxy-1-ethanol, 1-propanol, 2-propanol, 1-ethoxy-2-propanol, 1-ethoxy-2-propanol, 1-butanol, 1-methoxy-2-butanol, 3-methoxy-1-butanol, 4-methoxy-1-butanol, isobutyl alcohol, pentyl alcohol, isopentyl alcohol, cyclohexanol, diethylene glycol, triethylene glycol, propylene glycol, glycerine, diacetone alcohol, phenol, benzyl alcohol, and cresol; ethers such as diethyl ether, diisopropyl ether, tetrahydrofuran, tetrahydropyran, 1,4-dioxane, anisole, 1,2-dimethoxyethane, diethylene glycol dimethylether, dicyclohexyl-18-crown-6, methyl carbitol, and ethylcarbitol; ketones such as furfural, acetone, 1,3-diacetyl acetone, ethyl methyl ketone, and cyclohexanone; esters such as ethyl acetate, butyl acetate, ethylene carbonate, propylene carbonate, and trimethyl phosphate; amides such as formamide, N-methyl formamide, N,N-dimethylformamide, and hexamethylphosphoric triamide; nitriles such as acetonitrile, propionitrile, succinonitrile, and benzonitrile; nitro compounds such as nitromethane and nitrobenzene; amines such as ethylene diamine, pyridine, piperidine, morpholine, and N-methylpyrrolidone; and sulfur-atom-containing compounds such as dimethylsulfoxide and sulfolane. These organic solvents can be used in an appropriate combination, if necessary.

The substrates used in the present invention can be commercially available ones and those which can be usually processed by forming appropriate materials, for example, into discs, 12 cm in diameter and 0.6 mm or 1.2 mm in thickness, using the methods such as compression molding method, injection molding method, compression-injection molding method, photopolymerization method (2P method), thermosetting integral method, and lightsetting integral method; and used singularly or plurally after appropriately attaching the discs together with adhesives or adhesive sheets, etc. In principal, any materials for the substrates can be used in the present invention as long as they are substantially transparent and have a transmittance of at least 80%, preferably, at least 90% through over the wavelength ranging from 400 nm to 800 nm. Examples of such materials are glasses, ceramics, and other plastics such as poly(methyl methacrylate), polycarbonate, polystyrene (styrene copolymer), polymethylpenten, polyetherimide, polyethersulfone, polyarylate, polycarbonate/polystyrene alloy, polyestercarbonate, polyphthalatecarbonate, polycarbonateacrylate, non-crystalline polyolefin, methacrylate copolymer, diallylcarbonatediethylene-glycol, and epoxy resins, among which polycarbonates are usually used frequently. In the case of plastic substrates, concaves for expressing synchronizing-signals and addresses of tracks and sectors are usually transferred to the internal circuit of the tracks during their formation. The form of concaves are not specifically restricted and preferably formed to give 0.1-0.8 µm in average wide and 20-300 nm in width.

In the case of coating the organic dye compounds of the present invention on the above substrates to form recording layers, the organic dye compounds are prepared into 0.5-5% (w/w) solutions in the above organic solvents, and then uniformly coated over the substrates to form a dried recording layer with 10-1,000 nm, preferably, 50-500 nm in thickness. Prior to the coating of the solutions, preliminary layers can be formed over the substrates to protect them and improve the adhesion ability of the substrates, if necessary. Materials for the preliminary layers are, for example, high-molecular substances such as ionomer resins, polyamide resins, vinyl resins, natural resins, silicons, and liquid rubbers. In the case of using binders, the following polymers can be used alone or in combination in a weight ratio of 0.01-10 times by weight of the organic dye compound(s): Cellulose esters such as nitrocellulose, cellulose phosphate, cellulose sulfate, cellulose acetate, cellulose propionate, cellulose lactate, cellulose palmitate, and cellulose acetate/propionate; cellulose ethers such as methyl cellulose, ethyl cellulose, propyl cellulose, and butyl cellulose; vinyl resins such as polystyrene, poly(vinyl chloride), poly(vinyl acetate), poly(vinyl acetal), poly(vinyl butyral), poly(vinyl formal), poly(vinyl alcohol), and poly(vinyl pyrrolidone); copolymer resins such as styrene-butadiene copolymers, styrene-acrylonitrile copolymers, styrene-butadiene-acrylonitrile copolymers, vinyl chloride-vinyl acetate copolymers, and maleic anhydride copolymers; acrylic resins such as poly(methyl methacrylate), poly(methyl acrylate), polyacrylate, polymethacrylate, polyacrylamide, and polyacrylonitrile; polyesters such as poly(ethylene terephthalate); and polyolefins such as polyethylene, chlorinated polyethylene, and polypropylene. Explaining the method for using the optical recording media, the high-density optical recording media such as DVD-Rs can write information at a relatively-high density by using laser beams with wavelengths of 680 nm or less, particularly, 390-450 nm irradiated by semiconductor lasers such as those of GaN, AlGaInP, GaAsP, GaAlAs, InGaP, InGaAsP, and InGaAlP, and other Nd-YAG lasers made by combining semiconductor lasers with second harmonic generating elements in a type of distributed feed back or Bragg reflection, etc. To read recorded information, laser beams with wavelengths similar to or slightly longer than those used for writing information can be used. As for the laser power for writing and reading information, in the optical recording media of the present invention, it is preferably set to a relatively-high level which exceeds the threshold of the energy required for forming pits when used for writing information, while it is preferably set to a relatively-low level, i.e., a level below the threshold when used for reading the recorded information, although the laser power level varies depending on the types and ratios of other light-resistant improvers used in combination with the organic dye compounds of the present invention: Generally, the laser power level can be controlled by increasing or decreasing to a power level of over 4 mW but not higher than 50 mW for writing, and to a power level of 0.1-4 mW for reading the recorded information while increasing or decreasing the power level within the above ranges. The recorded information is read out by detecting with a light pickup the changes of both the reflection light level and the transmission light level in the pits and the pit-less parts on the recorded surface of optical recording media.

Accordingly, in the optical recording media according to the present invention, quite minute pits with a pit width and a track pitch of below the level of the existing CD-R's with a pit width of 0.834 µm/pit and a track pitch of 1.6 µm can be formed smoothly at a relatively high density by using a pick up by a laser element with an oscillation wavelength of 700 nm or less. Thus, in the case of using, for example, a substrate, 12 cm in diameter, it can realize an extremely-high density optical recording medium having a recording capacity of far exceeding 4.7 GB per one side, i.e., a recording capacity for about two hours of information in the form of images and voices, which could not be easily attained by the existing CD-Rs.

Since the optical recording media according to the present invention can record information in the form of characters, images, voices, and other digital information at a relatively high density, they are advantageously useful as recording media for professional and family use to record/backup/keep documents, figures, data, and computer software. Particular examples of the kinds of industries and the forms of information, to which the optical recording media of the present invention can be coated, are as follows: Drawings of construction and engineering works , maps , ledgers of loads and rivers, aperture cards, architectural sketches, documents of disaster protection, wiring diagrams, arrangement plans, information of newspapers and magazines, local information, reports of construction works , etc. , which all relate to architectures and civil construction; blueprints, ingredient tables, prescriptions, product specifications, product price tables, parts lists, maintenance information, case study files of accidents and problems, examples for treating claims, production schemes, technical documents, sketches, details, company house-made product files, technical reports, analysis reports, etc., which all relate to manufacturing; customer information, correspondents information, company information, contracts, information from newspapers and magazines, business reports, reports of company credibility, records of stocks, etc., which all relate to sales; company information, records of stocks, statistical documents, information of newspapers and magazines, contracts, customer lists, documents of application/ notification/licenses/authorization, business reports, etc., which all relate to finance; information regarding properties, sketches of construction, maps, local information, information of newspapers and magazines, contracts of leases, company information, stock lists, traffic information, correspondents information, etc., which all relate to real property and transportations; diagrams of writings and piping arrangements, documents of disaster protection, tables of operation manuals, documents of investigations , technical reports , etc., which all relate to electric and gas supplies; patient files, files of patient clinical histories and case studies, diagrams of medical care/institution relationships, etc., which all relate to medical fields; texts, collections of questions, educational documents, statistical information, etc. , which all relate to private and preparatory schools; scientific papers, records in academic societies, monthly reports of research, research data, documentary records and indexes thereof, etc., which all relate to universities, colleges, and research institutes; inspection data, literatures, patent publications, weather maps, analytical records of data, customer files, etc., which all relate to information; case studies on laws; sightseeing information, traffic information, etc., which all relate to sightseeing; indexes of homemade publications, information of newspapers and magazines, who's who files, sport records, telop files, scripts for broadcastings, etc., which all relate to mass communications and publishing; and maps, ledgers of roads and rivers, fingerprint files, resident cards, documents of application/notification/license/authorization, statistical documents, public documents, etc., which all relate to government offices. Particularly, the write-once type optical recording media of the present invention can be advantageously useful for storing records of patient files and official documents, which must not be deleted or rewritten intentionally, and also used as electronic libraries for art galleries, libraries, museums, broadcasting stations, etc.

As a rather specific use, the optical recording media of the present invention can be used to prepare and edit compact discs, digital video discs, laser discs, MDs (a mini disc as information recording system using photomagnetic disc), CDVs (a laser disc using compact disc), DATs (an information recording system using magnetic tape), CD-ROMs (a read-only memory using compact disc), DVD-RAMs (a writable and readable memory using digital video disc), digital photos, movies, video software, audio software, computer graphics, publishing products, broadcasting programs, commercial messages, game software, etc.; and used as external program recording means for large-sized computers and car navigation systems.

The following example describes the preferred embodiment according to the present invention:

### Comparative Example 1

### Optical recording medium

To TFP was added, as a light absorbent, the organic dye compound, represented by Chemical Formula 2, 4, 11, 14 or 18, to give a concentration of 2 w/w % and having an absorption maximum at a wavelength longer than 660 nm, and the mixture was mixed with, as a light-resistant improver, the nitroso compound represented by Chemical Formula 39 to give a concentration of 0.5% (w/w), and then heated and energized with ultrasonic to dissolve the contents. The solution was membrane filtered in a usual manner and coated in a rotatory manner over one side of a polycarbonate disc substrate, 12 cm in diameter and 0.6 mm in thickness, which concaves for expressing synchronizing signals and addresses for tracks and sectors had been transferred to the track's internal circuit, and dried to form a recording layer, 120 nm in thickness. Thereafter, the substrate was spattered with silver to form a reflection layer, 100 nm in thickness, to be closely attached on the surface of the recording layer, and the reflection layer was homogeneously coated in a rotatory manner with "DAICURE CLEAR SD1700", a known ultraviolet rays hardening resin commercialized by Dainippon Ink and Chemicals, Inc., Tokyo, Japan, and irradiated to form a protective layer to be closely attached on the surface of the reflection layer, followed by attaching a polycarbonate disc protective substrate, 12 cm in diameter and 0.6 mm in thickness, to the above protective layer into an optical recording medium.

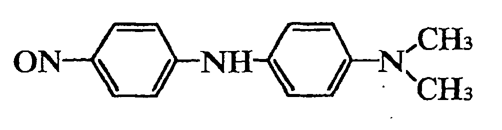

The optical recording media in this example have a recording capacity over 4 GB and can write a large amount of information in the form of documents, images, and voices, and other digital information at a relatively high density by using laser elements that oscillate at wavelengths of around 660 nm. Electron microscopic observation of the recorded surface of the optical recording media in this example, which had been experimentally written information using a semiconductor laser beam that oscillates at a wavelength of 658 nm, revealed that minute pits with a pit width of below 1 µm/pit were formed at a relatively-high density of a track pitch of below 1 µm.

### Example 1

### Optical recording medium

To TFP was added, as a light absorbent, the organic dye compound, represented by Chemical Formula 20, 23, or 35, to give a concentration of 2 w/w % and having an absorption maximum at a wavelength longer than 405 nm, and the mixture was mixed with, as a light-resistant improver, the nitroso compound represented by Chemical Formula 39 to give a concentration of 0.5% (w/w), and then heated and energized with ultrasonic to dissolve the contents. The solution was membrane filtered in a usual manner and coated in a rotatory manner over one side of a polycarbonate disc substrate, 12 cm in diameter and 0.6 mm in thickness, which concaves for expressing synchronizing signals and addresses for tracks and sectors had been transferred to the track's internal circuit, and dried to form a recording layer, 120 nm in thickness. Thereafter, the substrate was spattered with silver to form a reflection layer, 100 nm in thickness, to be closely attached on the surface of the recording layer, and the reflection layer was homogeneously coated in a rotatory manner with "DAICURE CLEAR SD1700" , a known ultraviolet rays hardening resin commercialized by Dainippon Ink and Chemicals, Inc., Tokyo, Japan, and irradiated to form a protective layer to be closely attached on the surface of the reflection layer, followed by attaching a polycarbonate disc protective substrate, 12 cm in diameter and 0.6 mm in thickness, to the above protective layer into an optical recording medium.

The optical recording media in this example have a recording capacity over 15 GB and can write a large amount of information in the form of documents, images, and voices and other digital information at a relatively high density by using laser elements that oscillate at wavelengths of around 405 nm. Electron microscopic observation of the recorded surface of the optical recording media in this example, which had been experimentally written information using a semiconductor laser beam that oscillates at a wavelength of 405 nm, revealed that minute pits with a pit width of below 1 µm/pit were formed at a relatively-high density of a track pitch of below 1 µm.

As described above, the present invention was made based on a self-finding of that even an organic dye compound, which has been deemed to be inapplicable to optical recording media and substantially absorbs a writing light in a region with wavelengths shorter than that of the absorption maxima of the organic dye compound, can be advantageously used as a main light absorbent for forming pits on the substrates of the optical recording media. The present invention finds out a potential use of conventional organic dye compounds deemed to be inapplicable to optical recording media, and widens the choices of organic dye compounds used mainly for forming pits on substrates when preparing optical recording media, particularly, high-density optical recording media using writing lights with wavelengths of ground 405 mm.

The present invention with these outstanding effects and functions is a beneficial invention that will greatly contribute to this art.

## Claims

1. An optical recording medium which comprises a recording layer comprising an organic dye compound, which is capable of recording information on irradiating said recording layer with a laser beam at a wavelength of around 405 nm as a writing light, wherein said organic dye compound has an absorption maximum at a wavelength longer than the wavelength of said writing light, substantially absorbs said writing light, and is a compound represented by any one of Chemical Formulae 20, 23 and 35:

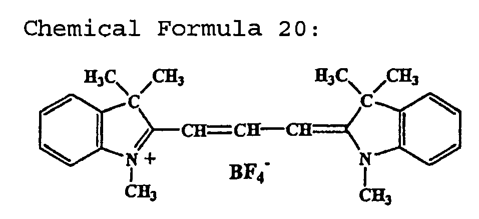

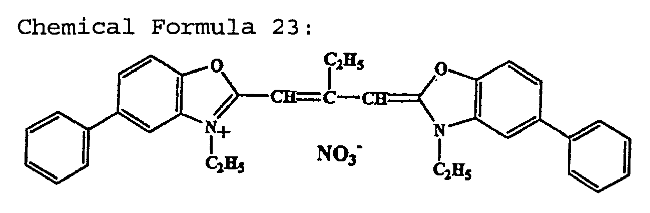

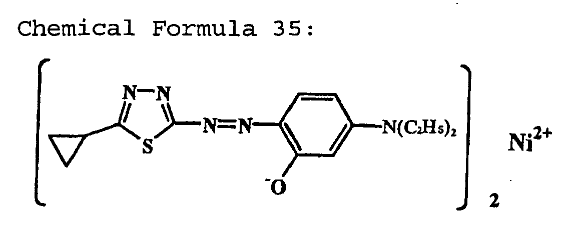

## Patentansprüche

1. Ein optisches Aufzeichnungsmedium bestehend aus einer Aufzeichnungsschicht, die eine organische Pigmentschicht ist, die durch Bestrahlen der genannten Aufzeichnungsschicht mit einem Laser bei einer Wellenlänge von ca. 405 nm als Schreiblicht Information aufzeichnen kann, wobei die genannte organische Pigmentverbindung eine maximale Adsorption bei einer Wellenlänge, die länger als die Wellenlänge des genannten Schreiblichts ist, aufweist, mehr oder weniger das genannte Schreiblicht absorbiert und eine Verbindung ist, die durch eine der chemischen Formeln 20, 23 und 35 repräsentiert wird:

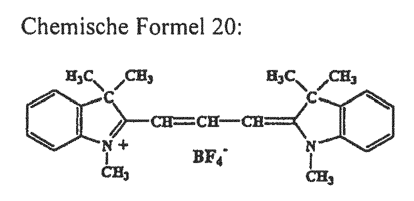

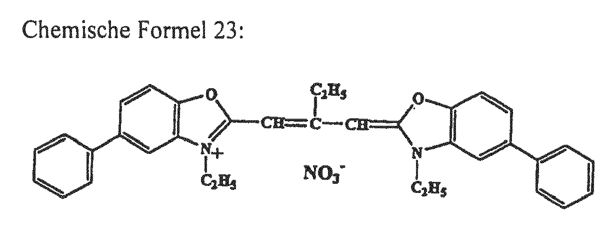

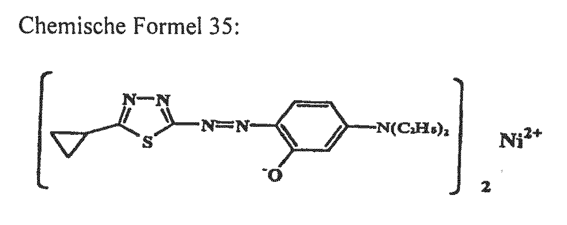

## Revendications

1. Support d'enregistrement optique qui renferme une couche d'enregistrement comprenant un composté colorant organique qui est apte à enregistrer des informations sur l'irradiation de ladite couche d'enregistrement avec un faisceau laser à une longueur d'onde d'environ 405 mn en tant que lumière de lecture, dans lequel ledit composé colorant organique possède une absorption maximale à une longueur d'onde plus longue que la longueur d'onde de ladite lumière d'écriture, absorbe sensiblement ladite lumière d'écriture et est un composé représenté par l'une des formules chimiques 20, 23 et 35 suivantes :
